(19) Europäisches Patentamt
European Patent Office
Office européen des brevets

(11) EP 1 137 705 B1

(12) # EUROPÄISCHE PATENTSCHRIFT

(45) Veröffentlichungstag und Bekanntmachung des Hinweises auf die Patenterteilung:
**22.09.2004 Patentblatt 2004/39**

(21) Anmeldenummer: **99970843.1**

(22) Anmeldetag: **30.10.1999**

(51) Int Cl.[7]: **C08K 5/20**

(86) Internationale Anmeldenummer:
**PCT/EP1999/008291**

(87) Internationale Veröffentlichungsnummer:
**WO 2000/029475 (25.05.2000 Gazette 2000/21)**

(54) **VERWENDUNG VON FETTSÄUREAMIDEN ZUR DAUERHAFTEN VERBESSERUNG DER KLEBSTOFF- UND/ODER BESCHICHTUNGS-KOMPATIBILITÄT VON POLYETHYLEN-BASIERTEN FORMKÖRPERN, FASERN UND FOLIEN**

UTILIZATION OF FATTY ACID AMIDES FOR THE LASTING IMPROVEMENT OF ADHESIVE AND/OR COATING COMPATIBILITY OF POLYETHYLENE-BASED SHAPED BODIES, FIBERS

UTILISATION D'AMIDES D'ACIDE GRAS POUR AMELIORER DURABLEMENT LA COMPATIBILITE D'ADHERENCE ET/OU DE REVETEMENT DE CORPS MOULES, DE FIBRES ET DE FILMS A BASE DE POLYETHYLENE

(84) Benannte Vertragsstaaten:
**AT BE CH CY DE DK ES FI FR GB GR IE IT LI LU MC NL PT SE**

(30) Priorität: **10.11.1998 DE 19851689**

(43) Veröffentlichungstag der Anmeldung:
**04.10.2001 Patentblatt 2001/40**

(73) Patentinhaber: **Cognis Deutschland GmbH & Co. KG**
**40589 Düsseldorf (DE)**

(72) Erfinder:
- **BIRNBRICH, Paul**
  **D-42719 Solingen (DE)**
- **KLAMANN, Jörg-Dieter**
  **D-27574 Bremerhaven (DE)**
- **TENHAEF, Rolf**
  **D-40627 Düsseldorf (DE)**

(56) Entgegenhaltungen:
**EP-A- 0 248 771**
**EP-A- 0 567 058**
**DE-A- 19 536 961**
**DE-A- 19 712 380**
**GB-A- 2 075 030**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 137 705 B1

## Beschreibung

### Gebiet der Erfindung

Die Erfindung betrifft die Verwendung von speziellen Fettsäureamiden zur dauerhaften Verbesserung der Klebstoff- und/oder Beschichtungs-Kompatibilität von Polyethylen-basierten Formkörpern, Fasern und Folien.

### Stand der Technik

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind.

Es ist bekannt, daß die Kompatibilität der Kunststoff-Oberfläche gegenüber Beschichtungen und Verklebungen durch beispielsweise oxidative Nachbehandlungsverfahren wie Corona- oder Plasmabehandlung verbessert werden kann. Hierbei wird der Kunststoff in Gegenwart von Gasen und Entladungen an der Oberfläche oxidiert oder chemisch modifiziert, wodurch sich gewisse OberflächenEigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen. Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**EP-B-372 890** beschreibt Fasern auf Polyolefin- oder Polyester-Basis mit einem mit der Oberfläche verhafteten Schmiermittel. Dieses Schmiermittel umfaßt eine Mischung aus (1) Fettsäurediethanolamid, (2) einem Polyether-modifizierten Silikon, (3) einem Sorbitan-Fettsäureester und (4) einem Metallsalz eines Alkylsulfonats; dabei liegen die Komponenten (1) bis (4) in speziellen Mengenverhältnissen vor. Gemäß Seite 3, Zeilen 20-26 wird die Mischung der Komponenten (1) bis (4) auf die Oberfläche aufgebracht. Diese Technik des Aufbringens der die vier Komponenten enthaltenden Mischung auf die Oberfläche bereits fertiger Fasern wird auch auf Seite 4, Zeilen 6-9 nochmals näher erläutert. Dort sind als Aufbring-Techniken genannt: a) der Einsatz von Rollen, b) ein Aufsprühen und c) das Eintauchen. Es handelt sich demnach um ein Verfahren, bei dem eine Mischung der Komponenten (1) bis (4) in einem zusätzlichen Verarbeitungsschritt auf die Oberfläche von Polyolefin-Formteilen aufgebracht wird. Der in Anspruch 1 der EP-B-372 890 verwendete Ausdruck "mit der Faseroberfläche verhaftet" ist demnach vom Fachmann klar in der Weise zu verstehen, daß es sich dabei lediglich um eine lockere und temporäre Haftung - etwa durch relativ schwache Adhäsionskräfte - handelt, keinesfalls aber um eine dauerhafte Verankerung.

Im Hinblick auf die sehr verbreiteten klassischen chemischen Nachbehandlungsverfahren wie Corona- und Plasmabehandlung ist dem Fachmann bekannt, daß sich keine genauen Aussagen über die ablaufenden Prozeßvorgänge machen lassen. Es gilt jedoch als erwiesen, daß sich oxidative Veränderungen der Oberfläche ergeben und dadurch gewisse "aktive Zentren" entstehen. Deren Konzentration geht jedoch in der Regel mit der Zeit zurück, so daß auch der Vorbehandlungseffekt nur über einen bestimmten Zeitraum, meist nicht über 72 Stunden hinaus, erhalten bleibt. (Vergleiche dazu etwa: **Klaus Stoeckert (Herausgeber), "Veredeln von Kunststoff-Oberflächen**", München 1974, Seite 137).

Den bisher referierten Methoden des Standes der Technik ist insgesamt gemeinsam, daß die angestrebten Oberflächen-Wirkungen in der Regel nur temporär vorhanden sind.

**EP-B-616 622** betrifft extrudierbare, kompostierbare Polymerzusammensetzungen, umfassend ein extrudierbares, thermoplastisches Polymer, Copolymer oder Mischungen davon, die ein abbauförderndes System aus einem autooxidativen Bestandteil und einem Übergangsmetall enthält. Das autooxidative System umfaßt dabei eine Fettsäure, eine substituierte Fettsäure oder Derivate oder Mischungen davon, wobei die Fettsäure 10 bis 22 C-Atome aufweist und mindestens 0,1 Gew.-% ungesättigter Verbindungen und mindestens 0,1 Gew.-% freie Säure enthält. Das Übergangsmetall ist in der Zusammensetzung in einer Menge von 5-500 ppm in Form eines Salzes enthalten und ausgewählt aus der Gruppe Kobalt, Mangan, Kupfer, Cer, Vanadium und Eisen. Die Zusammensetzung soll in Form einer Folie einer Dicke von etwa 100 Mikron bei 60 °C und einer relativen Feuchtigkeit von mindestens 80% innerhalb von 14 Tagen oxidativ zur Versprödung abbaubar sein.

**WO 97/12694** und **WO 98/42776** beschreiben die Verwendung von Amphiphilen zur dauerhaften Verbesserung der Klebstoff- und/oder Beschichtungs-Kompatibilität von Polyolefin-basierten Formkörpern, Fasern und Folien. Dabei unterwirft man eine Mischung enthaltend (a) überwiegend ein oder mehrere Polyolefine, (b) ein oder mehrere migrationsfähiger Amphiphile und (c) ein oder mehrere Übergangsmetall-Verbindungen, bei Temperaturen im Bereich von 180 bis 320 °C auf übliche Weise einer formgebenden Verarbeitung, beispielsweise der Extrusion. Es ist offenbart, daß als Komponente b) insbesondere Dialkanolamide ungesättigter Fettsäuren, etwa Ölsäurediethanolamid oder Linolsäurediethanolamid, eingesetzt werden können. Im Hinblick auf die Natur der Komponente (c) offenbart WO 97/12694

hinsichtlich des darin enthaltenen Übergangsmetalls insbesondere Co, Zr, Fe, Pb, Mn, Ni, Cr, V und Ce, WO 98/42776 insbesondere Ti und Sn.

## Beschreibung der Erfindung

Aufgabe der vorliegenden Erfindung war es, Arbeitsmittel bereitzustellen, mit denen die Klebstoff- und/oder Beschichtungs-Kompatibilität von Polyethylen basierten Formkörpern, Fasern und Folien nachhaltig und dauerhaft verbessert werden kann. Mit anderen Worten war es Ziel der vorliegenden Erfindung, Arbeitsmittel bereitzustellen, um eine permanente Verbesserung der Haftfestigkeit von Polyethylenoberflächen gegenüber Verklebungen und/oder Beschichtungen sicherzustellen. Die Erfindung will dabei insbesondere die Einstellung hochfester Verklebungen ermöglichen, die das Auftreten von unerwünschten Adhäsionsbrüchen ausschließen und eine Zerstörung der Klebstoffuge nur über einen Cohäsionsbruch bzw. über einen kombinierten Cohäsions/-Adhäsionsbruch sicherstellen. Insbesondere sollte die Wirkung der aus dem Stand der Technik bekannten Amphiphile zur dauerhaften Verbesserung der Klebstoff- und/oder Farbstoff-Kompatibilität Polyethylen-basierter Formkörper, Fasern und Folien quantitativ verbessert werden. Gegenstand der vorliegenden Erfindung ist die Verwendung von Fettsäureamiden zur dauerhaften Verbesserung der Klebstoff- und/oder BeschichtungsKompatibilität von Polyethylen-basierten Formkörpern, Fasern und Folien, wobei man eine Mischung enthaltend

a) überwiegend ein oder mehrere Polyethylene

b) 0,01 bis 20 Gew.-% - bezogen auf die Polyethylene - ein oder mehrere Fettsäureamide und

c) 0,01 bis 1000 ppm ein oder mehrere Übergangsmetall-Verbindungen - Metallgehalt der Übergangsmetall-Verbindungen bezogen auf die Polyethylen

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft, mit der Maßgabe, daß man die Fettsäureamide b) auswählt aus der Klasse der Verbindungen der allgemeinen Struktur (I),

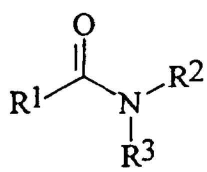

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^2$ und $R^3$ gleichzeitig Wasserstoff bedeuten und der zusätzlichen Maßgabe, daß die Mischung enthaltend die Komponenten a), b) und c) Fettsäureamide auf Basis ungesättigter Fettsäuren höchstens in einer Menge enthält, die 40 Gew.-% - bezogen auf die Menge der Fettsäureamide b) auf Basis gesättigter Fettsäuren - entspricht.

Unter "Übergangsmetallen" werden im Rahmen der vorliegenden Erfindung alle Übergangsmetalle im engeren Sinne verstanden (vergl. z.B. Römpps ChemieLexikon, Stuttgart 1977, S. 3717), darüber hinaus die Metalle Zinn (Sn) und Blei (Pb).

Die erfindungsgemäß einzusetzenden Fettsäureamide b) der allgemeinen Struktur (I) leiten sich von gesättigten Fettsäuren mit 6 bis 22 C-Atomen ab. Diese Fettsäuren sind durch die allgemeine Struktur (II) $R^1$-COOH, worin $R^1$ die oben genannte Bedeutung hat, charakterisiert.

In einer Ausführungsform handelt es sich bei den Fettsäureamiden b) um Fettsäurealkanolamide oder -dialkanolamide, wobei die diesen Verbindungen zu Grunde liegenden Fettsäuren gesättigte Fettsäuren mit 6-22 C-Atomen sind.

Bei den Fettsäurealkanolamiden handelt es sich um Verbindungen der allgemeinen Struktur (Ia),

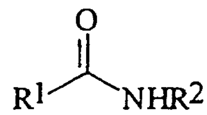

(Ia)

worin $R^1$ die oben genannte Bedeutung hat und $R^2$ einen Alkylrest mit 1 bis 18 C-Atomen bedeutet, der mit jeweils bis zu 6 OH-Gruppen, $NH_2$-Gruppen oder $C_{1-10}$-Alkylgruppen substituiert sein kann. Vorzugsweise bedeutet $R^2$ einen Alkylrest mit 1 bis 6 C-Atomen, der mit einer OH-Gruppe substituiert ist.

Bei den Fettsäuredialkanolamiden handelt es sich um Verbindungen der allgemeinen Struktur (Ib),

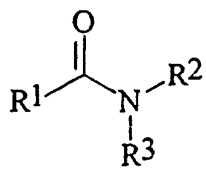

(Ib)

worin $R^1$ die oben genannte Bedeutung hat und die Reste $R^2$ und $R^3$ - unabhängig voneinander - Alkylreste mit 1 bis 18 C-Atomen bedeuten, die mit jeweils bis zu 6 OH-Gruppen, $NH_2$-Gruppen oder $C_{1-10}$-Alkylgruppen substituiert sein können. Vorzugsweise bedeuten die Reste $R^2$ und $R^3$ Alkylreste mit 1 bis 6 C-Atomen, der mit einer OH-Gruppe substituiert sind.

Diese Verbindungen b) können sowohl einzeln als auch in Kombination miteinander eingesetzt werden.

In einer bevorzugten Ausführungsform setzt man solche Verbindungen b) ein, deren zu Grunde liegende Fettsäuren gesättigte Fettsäuren mit 12-16 und insbesondere 12-14 C-Atomen sind. Besonders bevorzugte Verbindungen dieser Klasse sind die Mono- und Di-Ethanolamide von Laurinsäure, Myristinsäure sowie in pflanzlichen Rohstoffen vorkommenden Gemischen dieser Säuren, beispielsweise Kokosfettsäure. Die genannten Verbindungen werden insbesondere in technischer Qualität eingesetzt.

In einer Ausführungsform gilt die zusätzliche Maßgabe, daß die Mischung enthaltend die Komponenten a), b) und c) Fettsäureamide auf Basis ungesättigter Fettsäuren höchstens in einer Menge enthält, die 10 Gew.-% - bezogen auf die Menge der Fettsäureamide b) auf Basis gesättigter Fettsäuren - entspricht.

Die erfindungsgemäß einzusetzenden Verbindungen b) sind zur Migration befähigt. Darunter ist zu verstehen, daß diese Verbindungen in der Lage sind, im Zuge der Herstellung durch beispielsweise Extrusionsverfahren an die Oberfläche des resultierenden Polyethylen-Formkörpers zu gelangen. Sie reichem sich dadurch an der Oberfläche bzw. den Oberflächen-nahen Bereichen der Kunststoff-Matrix an, was durch sukzessives Abtragen von Oberflächenschichten in der Größenordnung von jeweils wenigen Nanometern und anschließende Abscan-Techniken von der Anmelderin verifiziert wurde.

Durch den erfindungsgemäßen Einsatz der genannten speziellen Fettsäureamide b) ist gewährleistet, daß Beschichtungen bzw. Verklebungen permanent und ohne zusätzliche Vorbehandlung am Kunststoff haften können. Dabei bleiben einmal eingestellte Klebstoff- und/oder Beschichtungs-Kompatibilitäts-Werte über lange Zeiträume erhalten oder steigen manchmal sogar noch bei weiterführender Lagerung an. Im Hinblick auf die Klebstoffe und Beschichtungsmassen, die mit den erfindungsgemäß Oberflächen-modifizierten Polyethylenen in Kontakt gebracht werden können, so daß dabei eine dauerhafte Verklebung bzw. Beschichtung realisiert ist, gibt es erfindungsgemäß an sich keinerlei Beschränkungen. So können im Hinblick auf die Klebstoffe alle dem Fachmann vertrauten Klebstoffe, insbesondere der handelsüblichen Klebstoffe eingesetzt werden. Im Hinblick auf Beschichtungen sei insbesondere auf die Lacke aufmerksam gemacht. Lacke sind flüssige oder pulverförmig-feste Substanzen, die in dünner Schicht auf Gegenstände appliziert werden und die durch chemische Reaktion und/oder physikalische Vorgänge einen auf den Oberflächen der Objekte haftenden festen Film bilden, der dekorative und/oder schützende Funktionen hat. Zu den Beschichtungen zählt auch das Aufbringen von Druckfarben, da Druckfarben in einer Bindemittelschicht auf zu bedruckende Substrate aufgebracht werden, wobei die Haftung am Formkörper durch das Bindemittel, das eine Beschichtung ausbildet, vermittelt wird.

Der Einsatz der Mischung enthaltend die Komponenten a), b) und c) erfolgt durch übliche und dem Fachmann wohlvertraute formgebende Verarbeitungstechniken wie Extrusions-, Kalandrier-, Spritzguß, Blasformverfahren und dergleichen. Dabei ist es im Rahmen der Lehre der vorliegenden Erfindungen bevorzugt, wenn im Zuge der formgebenden Verarbeitung die Schmelze der Mischung enthaltend die Komponenten a), b) und c) mit Sauerstoff - insbesondere Luftsauerstoff - in Kontakt kommt. Dies ist beispielweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse sowie weitere Sekundärreaktionen stattfinden können. Dabei kann (Luft-)Sauerstoff einerseits an der Oberfläche selbst wirken, andererseits auch im Inneren des Kunststoffs - insbesondere in Oberflächen-nahen Bereichen -, wohin er durch Diffusion gelangen kann.

Die Kombination der erfindungsgemäßen Lehre, die zur Ausbildung erhöhter Beschichtungs- bzw. Verklebungs-Kompatibilitäts-Werte führt, mit an sich bekannten Technologien zur Verbesserung der Beschichtungs- bzw. VerklebungsKompatibilität auf Polyethylenoberflächen fällt in den Rahmen der erfindungsgemäßen Lehre. So können die Oberflächen der gemäß der vorliegenden Erfindung hergestellten Polyethylene zusätzlich sowohl mechanisch wie chemisch und/oder physikalisch behandelt werden. Erforderlich ist das allerdings in aller Regel nicht.

Wie bereits gesagt werden die Verbindungen b) bei der formgebenden Verarbeitung der Polyolefine a) in Kombination mit Übergangsmetall-Verbindungen c) eingesetzt. Dabei beträgt die Menge der Übergangsmetall-Verbindung - Metallgehalt der Übergangsmetall-Verbindung bezogen auf die Polyolefine - 0,01 bis 1000 ppm. Im Hinblick auf die Art der Übergangsmetall-Verbindungen besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen Übergangsmetallsalze ein, vorzugsweise Salze auf Basis von organischen Säuren mit 6 bis 22 C-Atomen. In einer weiteren Ausführungsform setzt man die Übergansmetall-Verbindungen in einer - Menge ein, die unterhalb von 5 ppm - Metallgehalt der Übergangsmetall-Verbindung bezogen auf die - liegt. In einer weiteren Ausführungsform setzt man solche Übergangsmetallverbindungen c) ein, deren Metalle aus der Gruppe Co, Zr, Fe, Pb, Mn, Ni, Cr, V, Ce, Ti und Sn gewählt sind.

Gewünschtenfalls setzt man neben den genannten obligatorischen Übergangsmetall-Verbindungen noch weitere Verbindungen ein, die dem Fachmann als Katalysatoren für oxidative Prozesse bekannt sind.

In einer bevorzugten Ausführungsform stellt man das Gewichtsverhältnis der Verbindungen b) zu dem Metallgehalt der Übergangsmetall-Verbindungen c) im Bereich von 10 : 0,1 und 10 : $10^{-7}$ ein. Bevorzugt ist ein Bereich von 10 : 0,02 und 10 : $10^{-6}$ und insbesondere 10 : 0,01 und 10 : $10^{-5}$.

Die erfindungsgemäße Verwendung der speziellen Fettsäureamide b) geschieht im Rahmen üblicher formgebender Verarbeitungsprozesse wie Extrusions-, Kalandrier-, Spritzguß-, Blasformverfahren und dergleichen. Dabei kann es gewünscht sein, eine vorkonfektionierte Mischung der Komponenten a), b) und c) einzusetzen. Mitverwendete weitere übliche Hilfsstoffe, die sich bei der Verarbeitung von Kunststoffen allgemein bewährt haben und die dem Fachmann bekannt sind, beispielsweise Slipmittel, Antistatika, Gleitmittel, Trennmittel, UV-Stabilisatoren, Antioxidantien, Füllstoffe, Brandschutzmittel, Entformungsmittel, Nukleirungsmittel und Antiblockmittel können entsprechend in getrennter Form vorkonfektioniert und bei der abschließenden Aufmischung der Fertigprodukte zugegeben werden. Auch die in der Praxis übliche Technik, die genannten Hilfsstoffe in einer Form einzusetzen, in der sie in Komponente a) bereits ganz oder teilweise enthalten sind, wird ausdrücklich in den Rahmen der vorliegenden Erfindung miteinbezogen.

Es kann aber - beispielsweise bei Anwendung der Extrudiertechnik - auch gewünscht sein, die Komponenten b) und/oder c) und/ oder andere Additive ganz oder teilweise direkt in die Polyethylenschmelze am Extruder einzudosieren, so daß die Mischung der Komponenten a), b) und c) - und gegebenenfalls weiterer Hilfsstoffe - nicht schon von vornherein als Vorkonfektionat vorhanden ist, sondern erst im Extruder selbst vorliegt. Eine derartige Technik bietet sich beispielsweise dann an, wenn die der Polymerschmelze zuzudosierenden Verbindungen b) in flüssiger Form vorliegen und ein Einspritzen dieser Komponente einfacher ist, als eine Vorkonfektionierung.

Es kann auch gewünscht sein - obgleich zur Erzielung des erfindungsgemäßen Effektes nicht erforderlich - im Anschluß an den erfindungsgemäßen Einsatz der Komponenten a) - c) - auf übliche Weise eine Corona- oder Plasmabehandlung vorzunehmen.

Als oleophiles Polyethylen-Basismaterial eigenen sich an sich alle heute bekannten Polymer- und Copolymertypen auf Ethylen- -Basis.

Auch Abmischungen reiner Polyethylen mit Copolymeren sind grundsätzlich geeignet, solange die Migrationsfähigkeit der Verbindungen b) im Sinne der erfindungsgemäßen Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); Random-Copolymere auf Basis Ethylen und Propylen, Blockcopolymere auf Basis Ethylen und Propylen; EPM (Poly[ethylen-co-propylen]); EPDM (Poly[ethylen-copropylen-co-nichtkonjugiertes Dien]).

Norbornen-Ethylen-Copolymere; Copolymere, die zu mindestens 80 % Ethylen enthalten und zu weniger als 20 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styroi-coacrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen.

Im Rahmen der vorliegenden Erfindung sind Homo- und Copolymere auf Basis von Ethylen besonders bevorzugt. In einer Ausführungsform der vorliegenden Erfindung setzt man dementsprechen als Polyolefin ausschließlich Polyethylen ein, in einer weiteren Ausführungsform Copolymere auf Basis von Ethylen und Propylen.

Das Aufbringen von Beschichtungen oder Verklebungen der erfindungsgemäß erhaltenen Oberflächen-modifizierten Formkörper kann an sich nach allen dem Fachmann bekannten einschlägigen Methoden erfolgen.

In einer Ausführungsform setzt man als Komponente a) Polyethylen ein. Sofern es sich dabei um HDPE (high density polyethylene) handelt, stellt man bei der formgebenden Verarbeitung vorzugsweise eine Temperatur im Bereich von 200 bis 300 °C, bei Ruß enthaltendem HDPE insbesondere 250 bis 300 °C ein, sofern es sich um LDPE (low density polyethylene) handelt, stellt man bei der formgebenden Verarbeitung vorzugsweise eine Temperatur im Bereich von 180 bis 260 °C und insbesondere 200 bis 260 °C ein.

Bei Extrusionsverfahren gelten die gerade für die HDPE- und LDPE-Verarbeitung gemachten Temperaturangaben insbesondere für die Temperatur der Austrittsdüse.

Sofern die formgebende Verarbeitung der Mischung der Komponenten a), b) und c) durch Extrusion geschieht, kühlt man den Polyethylensformkörper unmittelbar nach dem Verlassen der Austrittsdüse vorzugsweise innerhalb eines Zeitraums von 0,1 bis 5,0 Sekunden um maximal 50 °C ab. Hinsichtlich dieser Temperaturdifferenz von 50 °C - nachfolgend auch ΔT50 genannt - gilt also die Gleichung

$$\Delta T50 = T_{Austrittsdüse} - T_{Polyethylenoberfläche}$$

In dieser Gleichung ist unter $T_{Austrittsdüse}$ die Temperatur der Austrittsdüse des Extruders zu verstehen, unter $T_{Polyethylenoberfläche}$ die Oberflächentemperatur des extrudierten Polyethylenformkörpers zu verstehen, die berührungslos, beispielsweise unter Einsatz einschlägig bekannter Infrarot-Techniken, gemessen wird (etwa mit einem Infrarot-Thermometer "IR-TA/Handy 1000" der Firma Chino).

Besonders bevorzugt ist es, den Polyethylenformkörper unmittelbar nach dem Verlassen der Austrittsdüse des Extruders innerhalb eines Zeitraums von 1,0 bis 5,0 Sekunden und insbesondere von 1,7 bis 5,0 Sekunden um maximal 50 °C abzukühlen.

Unter der Voraussetzung, daß der Polyethylenformkörper sich ab dem Verlassen der Austrittsdüse des Extruders mit konstanter Geschwindigkeit bewegt, kann die genannte Zeitskala in einfacher Weise in eine Entfemungsskala transformiert werden. Hierzu wird die bekannte Gleichung v = s / t (Geschwindigkeit = Wegstrecke geteilt durch Zeit) herangezogen, aus der sich durch Umformung s = v * t (Wegstrekke = Geschwindigkeit mal Zeit) ergibt, aus der man ersieht, daß Wegstrecke s (d.h. Entfernung von der Austrittsdüse) und Zeit t einander proportional sind. Der Nullpunkt der Entfemungsskala liegt definitionsgemäß unmittelbar an der Austrittsstelle der Düse.

Die unter Einsatz der Fettsäureamide b) erhältlichen Polyethylenformkörper, insbesondere die durch Extrusion zugänglichen Granulate. können ihrerseits dazu verwendet werden, als sogenannte Masterbatches bei der Verarbeitung von Massenkunststoffen eingesetzt zu werden.

Ein weiterer Gegenstand der Erfindung ist ein Verfahren zur Herstellung von verklebten und/oder beschichteten Polyethylen-basierten Formkörpern, Fasern und Folien, wobei man man eine Mischung enthaltend

a) überwiegend ein oder mehrere Polyethylene,

b) 0,01 bis 20 Gew.-% - bezogen auf die Polyethylene - ein oder mehrere Fettsäureamide und

c) 0,01 bis 1000 ppm ein oder mehrerer Übergangsmetall-Verbindungen - Metallgehalt der Übergangsmetall-Verbindungen bezogen auf die Polyethylene

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft und die dabei erhaltenen Polyethylen-basierten Formkörper, Fasern und Folien mit verbesserter Klebstoff- und/oder Beschichtungs-Kompatibilität anschließend auf übliche Weise mit einem Klebstoff und/oder einer Beschichtungsmasse in Kontakt bringt, dadurch gekennzeichnet, daß man die Fettsäureamide b) auswählt aus der Klasse der Verbindungen der allgemeinen Struktur (I),

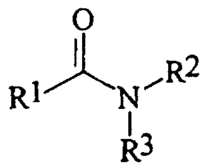

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^2$ und $R^3$ gleichzeitig Wasserstoff bedeuten und der zusätzlichen Maßgabe, daß die Mischung enthaltend die Komponenten a), b) und c) Fettsäureamide auf Basis ungesättigter Fettsäuren höchstens in einer Menge enthält, die 40 Gew.-% - bezogen auf die Menge der Fettsäureamide b) auf Basis gesättigter Fettsäuren - entspricht.

**Beispiele**

**1. Eingesetzte Materialien**

**1.1.** Polyolefine (a)

| | |
|---|---|
| Hosta: | High-Density-Polyethylen (Handelsprodukt "Hostalen CRP 100" der Firma Hostalen GmbH); dieses Polyethylen enthält nach Angaben des Herstellers auch Antioxidantien und Ruß |
| Lupo: | Low-Density-Polyethylen (Handelsprodukt "Lupolen 1800 H" Handels-produkt der Firma Elenac) |

**1.2.** Additive (b)

| | |
|---|---|
| Comperlan LD: | Laurinsäurediethanolamid (Handelsprodukt der Firma Henkel KGaA, Düsseldorf) |
| Comperlan LM: | Laurinsäuremonoethanolamid (Handelsprodukt der Firma Henkel KGaA, Düsseldorf) |
| Comperlan F: | Linolsäurediethanolamid (Handelsprodukt der Firma Henkel KGaA, Düsseldorf) |
| C8-AE | Umsetzungsprodukt von Caprylsäuremethylester mit 2-(2-Aminoethoxy)-ethanol (die Herstellung erfolgte gemäß der untenstehenden allgemeinen Vorschrift zur Herstellung von Amiden) |
| C12-AE | Umsetzungsprodukt von Laurinsäuremethylester mit 2-(2-Aminoethoxy)-ethanol (die Herstellung erfolgte gemäß der untenstehenden allgemeinen Vorschrift zur Herstellung von Amiden) |
| C16-AE | Umsetzungsprodukt von Palmitinsäuremethylester mit 2-(2-Aminoethoxy)-ethanol (die Herstellung erfolgte gemäß der untenstehenden allgemeinen Vorschrift zur Herstellung von Amiden) |
| C8-APD | Umsetzungsprodukt von Caprylsäuremethylester mit 3-Amino1,2-propandiol (die Herstellung erfolgte gemäß der untenstehenden allgemeinen Vorschrift zur Herstellung von Amiden) |
| C12-APD | Umsetzungsprodukt von Laurinsäuremethylester mit 3-Amino-1,2-propandiol (die Herstellung erfolgte gemäß der untenstehenden allgemeinen Vorschrift zur Herstellung von Amiden) |
| C16-APD | Umsetzungsprodukt von Palmitinsäuremethylester mit 3-Amino-1,2-propandiol (die Herstellung erfolgte gemäß der untenstehenden allgemeinen Vorschrift zur Herstellung von Amiden) |

| | |
|---|---|
| C12-EA | Umsetzungsprodukt von Laurinsäuremethylester mit Ethanolamin (die Herstellung erfolgte gemäß der untenstehenden allgemeinen Vorschrift zur Herstellung von Amiden) |
| C12-AP | Umsetzungsprodukt von Laurinsäuremethylester mit 3-Amino-1-propanol (die Herstellung erfolgte gemäß der untenstehenden allgemeinen Vorschrift zur Herstellung von Amiden) |
| C12-MPMD | Umsetzungsprodukt von Laurinsäuremethylester mit 2-Methylpentamethylendiamin (die Herstellung erfolgte gemäß der untenstehenden allgemeinen Vorschrift zur Herstellung von Amiden) |
| C12-BEPD | Umsetzungsprodukt von Laurinsäuremethylester mit 2-Butyl-2-ethyl-1,5-pentandiamin (die Herstellung erfolgte gemäß der untenstehenden allgemeinen Vorschrift zur Herstellung von Amiden) |
| C 18-DEA | Stearinsäurediethanolamid |

Allgemeine Vorschrift zur Herstellung von Amiden

1 Mol Fettsäuremethylester und 1 Mol Amin wurden in einem 500-ml-Kolben mit Rührer, Tropftrichter und Innenthermometer vorgelegt. Unter Rühren wurde unter einer Inertgasathmosphäre (Stickstoff) zügig das Amin zugetropft. Anschließend wurden 7,2 g einer 30 Gew.-%-igen Lösung von Natriummethylat in Methanol zugegeben und das Reaktionsgemisch langsam auf eine Sumpftemperatur von 120 °C erwärmt. Bei dieser Temperatur wurde 4 Stunden gerührt. Anschließend destillierte man im Wasserstrahlvakuum bei einer Sumpftemperatur von 180 °C kontinuierlich Methanol ab.

Nach dieser Vorschrift wurden folgende Verbindungen b) hergestellt: C8-AE, C12-AE, C16-AE, C8-APD, C12-APD, C16-APD, C12-EA, C12-AP, C12-MPMP, C12-BEPD.

### 1.3. Übergangsmetall-Verbindungen (c)

Die Metalle der eingesetzten Übergangsverbindungen c) wiesen jeweils die Oxidationsstufe +2 auf. Fe, Mn, Zr, und Ce wurden in Form ihrer Octoate bzw. Nitrate eingesetzt. Co und Cu wurden in Form von "Octa-Soligen Kobalt 6 in D60" bzw. "Soligen Kupfer 8" (handelsübliche Produkte der Firma Borchers) eingesetzt; diese Produkte wurden in den Tabellen 1 bis 3 als Co-Soligen bzw. Cu-Soligen bezeichnet.

### 2. Herstellung von Oberflächen-modifiziertem Polyethylen gemäß dem Verfahren der Erfindung

Zur Überprüfung der Klebstoff-Kompatibilitäts-Eigenschaften von Oberflächen-modifiziertem Polyethylen wurden zunächst Polyethylen-Bänder hergestellt. Dazu wurden jeweils

- 600 g Polyethylen-Granulat a) (die Art des jeweils eingesetzten Polyethylens ist den Tabellen 1 bis 3 zu entnehmen),
- Additiv b) und
- Übergangsmetall-Verbindung c)

vermengt. Art und Menge der jeweils eingesetzten Komponenten b) und c) ist jeweils den Tabellen 1 bis 3 zu entnehmen. Diese Mischungen wurden durch einen Trichter in einen Extruder eingebracht. Eingesetzt wurde dabei ein Doppelschnekkenextruder DSK 42/7 der Firma Brabender OHG (Duisburg). Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist. Unter dem Einfülltrichter befindet sich neben einer Wasserkühlung, die ein verfrühtes Schmelzen des Granulates bzw. Pulvers verhindern soll, auch eine gegenläufige Doppelschnecke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden is. Für die Herstellung der Polyethylenbänder wurden die folgenden Temperaturen eingestellt: Heizzonen I-III jeweils 230°C, wobei die drei Heizzonen luftgekühlt waren, um die Temperaturen konstant zu halten.

Das Polyethylen-Granulat inclusive der jeweiligen Komponenten b) und c) wurde automatisch durch die gegeneinander laufende Doppelschnecke in den Extruder eingezogen und entlang der Schnecke befördert. Die Drehzahl betrug dabei 50 Umdrehungen pro Minute. Dadurch war eine relativ lange Verweilszeit im Extruder und dementsprechend eine gute Durchmischung und Homogenisierung gewährleistet. Diese homogene und praktisch bläschenfreie Mischung gelangte schließlich in eine Düse, die eine vierte Heizzone darstellt. Die Temperatur dieser Austrittsdüse wurde in den einzelnen Versuchen variiert und ist den Tabellen 1 bis 3 zu entnehmen.

Nach dem Austritt aus der Düse floß die heiße Mischung auf ein Transportband, dessen Geschwindigkeit so eingestellt wurde, daß beim Abkühlen an der Luft ein glattes und gleichmäßig dickes und breites Band entstand. Bei den hier beschriebenen Arbeiten wurde die Geschwindigkeit so eingestellt, daß das Polyethylenband etwa 35 mm breit und etwa 0,35 mm dick war. Aus diesem Material wurden quadratische Prüfkörper (25 x 25 mm) ausgestanzt und für die unten näher beschriebenen Klebeversuche eingesetzt.

### 3. Klebe- und Zerreiß-Versuche

#### 3.1. Herstellung der Prüflinge

Die gemäß 2) hergestellten extrudierten Bänder wurden 24 Stunden bei Raumtemperatur (20 °C) gelagert. Anschließend wurden quadratische Polyethylenstücke von 25 x 25 mm zwischen zwei Holzbrettchen mit den Maßen 100 x 25 mm verklebt. Die Verklebung hatte dabei eine Dicke von 2 mm. Die Klebefläche betrug exakt 25 x 25 = 625 $mm^2$. Es sei darauf hingewiesen, daß die Versuchsanordnung der entspricht, die auf S. 21 der oben genannten WO 98/42776 skizziert wurde (abgesehen davon, daß dort Polypropylenprüfstücke und hier Polyethylenprüfstücke eingesetzt werden).

Als Klebstoff wurde ein Zweikomponentenklebstoff eingesetzt (Polyurethan-Kleber "Makroplast" der Firma Henkel KGaA/Düsseldorf). Dazu wurden in einer Aluminiumschale die beiden Reaktivkomponenten (Harz = UK 8109; Härter = UK 5400) im Verhältnis Harz : Härter von 5:1 angerührt. Die Topfzeit betrug etwa 1 Stunde.

Nach etwa 1-stündiger Lagerung wurden von jedem Band Streifen mit einer Breite von 25 mm abgeschnitten und mit Hilfe einer Schablone zwischen zwei Holzbrettchen beidseitig verklebt. Es wurden dabei 5 Verklebungen von jedem Kunststoffband angefertigt. Die Verwendung einer Schablone garantierte dabei die Einhaltung der gewünschten Klebefläche zwischen dem modifiziertem Kunststoff und den Brettchen. Zur Fixierung des Prüflings wurden dabei Holzklammern verwendet. Überschüssiger Kleber wurde entfernt.

#### **3.2.** Zerreiß-Versuche

Die gemäß 3.1.) hergestellten Prüflinge wurden etwa 3 bis 4 Tage bei 20 °C gelagert, um sicherzustellen, daß der Zweikomponentenklebstoff völlig ausgehärtet war. Zur Messung der Zugscherkräfte wurde anschließend eine Universalprüfmaschine der Firma Zwick verwendet. Die Geschwindigkeit, mit der der Prüfling auf Zug beansprucht wurde, betrug 15 mm/min. Die verklebten Holzspatel (= Prüflinge) wurden in die Klemmbacken der Universalprüfmaschine eingespannt und mit der vorgegebenen Prüfgeschwindigkeit auseinandergezogen. Dabei wurde sichergestellt, daß die Prüflinge stets senkrecht und exakt in der Mitte des Prüfgerätes angeordnet waren. Die erzielten Versuchsergebnisse sind in den Tabellen 1 bis 3 zusammengestellt. Sämtliche Ergebnisse sind Mittelwerte aus jeweils 5 Versuchen.

<u>Zu den Spalten der Tabellen 1-3:</u>

- Nr. Versuchs-Nummer (B= erfindungsgemäß; V=Vergleich)
- a) Komponente a) (Polyolefin)
- b) Komponente b) (bzw. - bei Vergleichsversuchen - ein Additiv); in der Spalte "%" ist angegeben, in welcher Menge die jeweilige Verbindung - Gew.-% bezogen auf die Komponente a) - eingesetzt wurde
- c) Komponente c); in der Spalte "ppm Me" ist angegeben, in welcher Menge - angegeben in ppm (parts per million)-das Übergangsmetall der Übergangsmetallverbindung-bezogen auf die Komponente a) - eingesetzt wurde
- T/Düse Temperatur der Austrittsdüse in °C
- ZSG Wert der Zugscherfestigkeit, ermittelt bei den Zerreiß-Versuchen. Die Angaben sind in Newton pro Quadratmillimeter.

Tabelle 1:

| Nr. | a) | b) | | c) | | T/Düse °C | ZSG |
|---|---|---|---|---|---|---|---|
| | | % | Verbindung | ppm Me | Verbindung | | |
| B 1 | Lupo | 1,0 | Comperlan LD | 6 | Co-Soligen | 220 | 2,67 |
| V1 | Lupo | 1,0 | Comperlan F | 6 | Co-Soligen | 220 | 0,52 |
| B2 | Lupo | 1,0 | Comperlan LD | 6 | Co-Soligen | 230 | 4,24 |
| V2 | Lupo | 1,0 | Comperlan F | 6 | Co-Soligen | 230 | 0,58 |
| B3 | Lupo | 1,0 | Comperlan LD | 6 | Co-Soligen | 240 | 4,85 |
| V3 | Lupo | 1,0 | Comperlan F | 6 | Co-Soligen | 240 | 2,28 |
| B4 | Lupo | 0,1 | Comperlan LD | 6 | Co-Soligen | 250 | 2,29 |
| V4 | Lupo | 0,1 | Comperlan F | 6 | Co-Soligen | 250 | 0,4 |
| B5 | Lupo | 0,3 | Comperlan LD | 6 | Co-Soligen | 250 | 3,87 |
| V5 | Lupo | 0,3 | Comperlan F | 6 | Co-Soligen | 250 | 1,33 |
| V6 | Lupo | - | - | 6 | | 250 | 0,20 |

Aus Tabelle 1 geht hervor, daß beim Einsatz der erfindungsgemäßen Fettsäureamide (vergl. die Beispiele B1 bis B5) auf Basis gesättigter Fettsäuren - hier demonstriert am Beispiel von Comperlan LD - deutlich bessere Resultate erzielt werden, als beim Einsatz von Fettsäureamiden auf Basis ungesättigter Fettsäuren - hier demonstriert am Beispiel von Comperlan F - (vergl. die Vergleichsbeispiele V1 bis V5).

Tabelle 2:

| Nr. | a) | b) | | c) | | T/Düse °C | ZSG |
|---|---|---|---|---|---|---|---|
| | | % | Verbindung | ppm Me | Verbindung | | |
| B6 | Lupo | 1,0 | Comperlan LD | 6 | Co-Soligen | 220 | 2,43 |
| B7 | Lupo | 1,0 | Comperlan LD | 6 | Co-Soligen | 230 | 3,31 |
| B8 | Lupo | 1,0 | Comperlan LD | 6 | Co-Soligen | 240 | 5,47 |
| B9 | Lupo | 1,0 | Comperlan LD | 6 | Co-Soligen | 250 | 5,67 |
| B10 | Lupo | 1,0 | Comperlan LD | 6 | Co-Soligen | 260 | 6,10 |
| B 11 | Hosta | 1,0 | Comperlan LD | 6 | Co-Soligen | 280 | 3,45 |
| B 12 | Hosta | 1,0 | Comperlan LD | 6 | Co-Soligen | 290 | 4,81 |
| B 13 | Hosta | 1,0 | Comperlan LD | 6 | Co-Soligen | 300 | 4,10 |

Tabelle 2 demonstriert, daß das Optimum der Temperatur der Austrittsdüse davon abhängt, ob das eingesetzte Polyethylen vom Typ HDPE oder vom Typ LDPE ist.

Tabelle 3:

| | a) | b) | | c) | | T/Düse °C | ZSG |
|---|---|---|---|---|---|---|---|
| | | % | Verbindung | ppm Me | Verbindung | | |
| B14 | Lupo | 1,5 | C8-AE | 6 | Co-Soligen | 230 | 4,05 |
| B15 | Lupo | 1,5 | C12-AE | 6 | Co-Soligen | 230 | 2,95 |
| B16 | Lupo | 1,5 | C12/14-AE | 6 | Co-Soligen | 230 | 4,51 |

Tabelle 3: (fortgesetzt)

| | a) | b) | | c) | | T/Düse °C | ZSG |
|---|---|---|---|---|---|---|---|
| | | % | Verbindung | ppm Me | Verbindung | | |
| B17 | Lupo | 1,5 | C8-APD | 6 | Co-Soligen | 230 | 2,38 |
| B18 | Lupo | 1,5 | C12-APD | 6 | Co-Soligen | 230 | 3,98 |
| B19 | Lupo | 1,5 | C12/14-APD | 6 | Co-Soligen | 230 | 4,51 |
| B20 | Lupo | 1,5 | C12-EA | 6 | Co-Soligen | 230 | 3,52 |
| B21 | Lupo | 1,5 | C12-AP | 6 | Co-Soligen | 230 | 2,85 |
| B22 | Lupo | 1,5 | C12-MPMD | 6 | Co-Soligen | 230 | 3,85 |
| B23 | Lupo | 1,5 | C12-BEPD | 6 | Co-Soligen | 230 | 3,78 |
| B24 | Lupo | 1,0 | Comperlan LM | 6 | Co-Soligen | 230 | 3,52 |
| B25 | Lupo | 1,0 | Comperlan LD | 6 | Fe-Octoat | 250 | 4,66 |
| B26 | Lupo | 1,0 | Comperlan LD | 6 | Mn-Octoat | 250 | 5,56 |
| B27 | Lupo | 1,0 | Comperlan LD | 6 | Zr-Octoat | 250 | 4,12 |
| B28 | Lupo | 1,0 | Comperlan LD | 6 | Ce-Octoat | 250 | 4,81 |
| B29 | Lupo | 1,0 | Comperlan LD | 6 | Cu-Soligen | 250 | 4,60 |
| B30 | Lupo | 1,0 | Comperlan LD | 6 | Co-Soligen | 250 | 6,77 |
| B31 | Lupo | 1,0 | C18-DEA | 6 | Co/Zr-Octoat | 250 | 5,21 |
| B32 | Lupo | 1,0 | Comperlan LD | 3 | Co-Nitrat | 250 | 4,81 |
| B33 | Lupo | 1,0 | Comperlan LD | 4,5 | Co-Nitrat | 250 | 5,47 |

Weitere Versuche der Anmelderin haben gezeigt, daß ZSG-Werte in derselben exzellenten Größenordnung wie gemäß den Tabellen 1 bis 3 erhalten werden, wenn man als Komponente c) Übergangsverbindungen bzw. Übergangsmetallsalze einsetzt, die die gleichen Metalle, jedoch andere Liganden bzw. Gegenionen enthalten.

Darüber hinaus haben weitere Untersuchungen der Anmelderin zu dem Ergebnis gefiihrt, daß ZSG-Werte in derselben exzellenten Größenordnung wie gemäß den Tabellen 1 bis 3 erhalten werden, wenn man die Klebe- und Zerreißversuche derart variiert, daß man an Stelle des Polyurethan-Klebers "Makroplast" andere handelsübliche Klebstoffe bei der Herstellung der Prüflinge einsetzt. Als Beispiele für solche Klebstoffe wurden mit exzellentem Erfolg geprüft: Sicomet 7000, Sicomet 8400, Sicomet 9010, Sicomet thixotrop (Cyanacrylate); Pattex Montage, Ponal Duo, Teromix 6700 (2-Komponenten-Polyurethan-Klebstoffe); Terorehm MC 9340 (Hotmelt-Polyurethan-Klebstoff); Metallon RA, Metallon FL, Pattex Kraft Mix (2-Komponenten-Epoxid-Klebstoffe.

**Patentansprüche**

1. Verwendung von Fettsäureamiden zur dauerhaften Verbesserung der Klebstoffund/oder Beschichtungs-Kompatibilität von Polyethylen-basierten Formkörpem, Fasem und Folien, wobei man eine Mischung enthaltend

   a) überwiegend ein oder mehrere Polyethylene,

   b) 0,01 bis 20 Gew.-% - bezogen auf die Polyethylene - ein oder mehrere Fettsäureamide und

   c) 0,01 bis 1000 ppm ein oder mehrere Übergangsmetall-Verbindungen - Metallgehalt der Übergangsmetall-Verbindungen bezogen auf die Polyethylene -

   bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft, mit der Maßgabe, daß man die Fettsäureamide b) auswählt aus der Klasse der Verbindungen der allgemeinen Struktur (I),

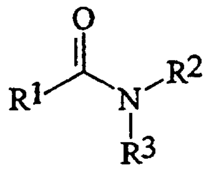

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^2$ und $R^3$ gleichzeitig Wasserstoff bedeuten und der zusätzlichen Maßgabe, daß die Mischung enthaltend die Komponenten a), b) und c) Fettsäureamide auf Basis ungesättigter Fettsäuren höchstens in einer Menge enthält, die 40 Gew.-% - bezogen auf die Menge der Fettsäureamide b) auf Basis gesättigter Fettsäuren - entspricht.

**2.** Verwendung nach Anspruch 1, wobei man die formgebende Verarbeitung der Mischung der Komponenten a), b) und c) in einem Extruder vornimmt, wobei man den Polyolefinformkörper unmittelbar nach dem Austritt aus der Austrittsdüse innerhalb eines Zeitraums von 0,1 bis 5,0 Sekunden maximal um 50 °C abkühlt.

**3.** Verwendung nach Anspruch 1 oder 2, wobei man solche Übergangsmetallverbindungen c) einsetzt, deren Metalle aus der Gruppe Co, Zr, Fe, Pb, Mn, Ni, Cr, V, Ce, Ti und Sn gewählt sind.

**4.** Verwendung nach einem der Ansprüche 1 bis 3, wobei man die Übergangsmetall-Verbindungen c) auswählt aus der Gruppe der Übergangsmetallsalze.

**5.** Verwendung nach einem der Ansprüche 1 bis 4, wobei man die die Übergangsmetall-Verbindungen c) in einer Menge einsetzt, die unterhalb von 5 ppm - Metallgehalt der Übergangsmetall-Verbindungen c) bezogen auf die Polyethylene a) - liegt.

**6.** Verwendung nach einem der Ansprüche 1 bis 5, wobei man das Gewichtsverhältnis der Fettsäureamide b) zu dem Metallgehalt der Übergangsmetall-Verbindungen c) im Bereich von 10 : 0,1 und 10 : $10^{-7}$ einstellt.

**7.** Verwendung nach einem der Ansprüche 1 bis 6, wobei bei der formgebenden Verarbeitung der Polyolefine übliche weitere Hilfsstoffe zusetzt und/oder als zusätzlichen weiteren Verarbeitungsschritt auf übliche Weise eine Corona- oder Plasmabehandlung vomimmt.

**8.** Verfahren zur Herstellung von verklebten und/oder beschichteten Polyethylen-basierten Formkörpem, Fasem und Folien, **dadurch gekennzeichnet, daß** man eine Mischung enthaltend

a) überwiegend ein oder mehrere Polyethylene,

b) 0,01 bis 20 Gew.-% - bezogen auf die Polyethylene - ein oder mehrere Fettsäureamide und

c) 0,01 bis 1000 ppm ein oder mehrerer Übergangsmetall-Verbindungen - Metallgehalt der Übergangsmetall-Verbindungen bezogen auf die Polyethylene -

bei Temperaturen im Bereich von 180 bis 330 °C auf übliche Weise einer formgebenden Verarbeitung wie Extrusion-, Kalandrier-, Spritzguß-, Blasformverfahren und dergleichen unterwirft und die dabei erhaltenen Polyolefin-basierten Formkörper, Fasem und Folien mit verbesserter Klebstoffund/oder Beschichtungs-Kompatibilität anschließend auf übliche Weise mit einem Klebstoff und/oder einer Beschichtungsmasse in Kontakt bringt, **dadurch gekennzeichnet, daß** man die Fettsäureamide b) auswählt aus der Klasse der Verbindungen der allgemeinen Struktur (I),

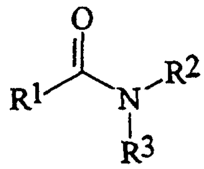

(I)

worin der Rest $R^1$ einen gesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten, mit der Maßgabe, daß nicht beide Reste $R^2$ und $R^3$ gleichzeitig Wasserstoff bedeuten und der zusätzlichen Maßgabe, daß die Mischung enthaltend die Komponenten a), b) und c) Fettsäureamide auf Basis ungesättigter Fettsäuren höchstens in einer Menge enthält, die 40 Gew.-% - bezogen auf die Menge der Fettsäureamide b) auf Basis gesättigter Fettsäuren - entspricht.

## Claims

**1.** The use of fatty acid amides for permanently improving the adhesive and/or coating compatibility of polyethylene-based mouldings, fibres and films, a mixture containing

a) predominantly one or more polyethylenes,
b) 0.01 to 20% by weight - based on the polyethylenes - of one or more fatty acid amides and
c) 0.01 to 1000 ppm of one or more transition metal compounds - metal

content of the transition metal compounds, based on the polyethylenes being subjected in known manner to moulding by extrusion, calendering, injection moulding, blow moulding and the like at temperatures of 180 to 330°C, with the proviso that the fatty acid amides b) are selected from the class of compounds corresponding to general formula (I):

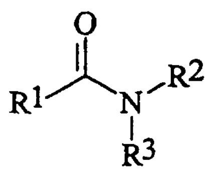

(I)

in which $R^1$ is a saturated alkyl group containing 5 to 21 carbon atoms, $R^2$ and $R^3$ independently of one another are hydrogen or alkyl groups containing 1 to 18 carbon atoms which may each be substituted by up to 6 OH groups, $NH_2$ groups or $C_{1-10}$ alkyl groups and in which up to three methylene groups which are not immediately adjacent one another may be replaced by oxygen, with the proviso that $R^2$ and $R^3$ cannot both be hydrogen and the additional proviso that the mixture containing components a), b) and c) contains fatty acid amides based on unsaturated fatty acids at most in a quantity which corresponds to 40% by weight, based on the quantity of fatty acid amides b) based on saturated fatty acids.

**2.** The use claimed in claim 1, **characterized in that** the mixture of components a), b) and c) is moulded in an extruder, the polyolefin moulding being cooled by at most 50°C in 0.1 to 5.0 seconds immediately after leaving the extrusion die.

**3.** The use claimed in claim 1 or 2, **characterized in that** transition metal compounds c) of which the metals are selected from the group consisting of Co, Zr, Fe, Pb, Mn, Ni, Cr, V, Ce, Ti and Sn are used.

**4.** The use claimed in any of claims 1 to 3, **characterized in that** the transition metal compounds c) are selected from the group of transition metal salts.

**5.** The use claimed in any of claims 1 to 4, **characterized in that** the transition metal compounds c) are used in a quantity below 5 mm - metal content of the transition metal compounds c), based on the polyethylenes a).

**6.** The use claimed in any of claims 1 to 5, **characterized in that** the ratio by weight of the fatty acid amides b) to the metal content of the transition metal compounds c) is adjusted to a value of 10:0.1 to $10:10^{-7}$.

**7.** The use claimed in any of claims 1 to 6, **characterized in that** other typical auxiliaries are used in the moulding of the polyolefins and/or a corona or plasma treatment is carried out in the usual way as an additional processing step.

**8.** A a process for the production of bonded and/or coated polyethylene-based mouldings, fibres and films, in which a mixture containing

a) predominantly one or more polyethylenes,
b) 0.01 to 20% by weight - based on the polyethylenes - of one or more fatty acid amides and
c) 0.01 to 1000 ppm of one or more transition metal compounds - metal

content of the transition metal compounds, based on the polyethylenes is subjected in known manner to moulding by extrusion, calendering, injection moulding, blow moulding and the like at temperatures of 180 to 330°C and the resulting polyethylene-based mouldings, fibres and films with improved adhesive and/or coating compatibility are subsequently contacted in the usual way with an adhesive and/or a coating composition, **characterized in that** the fatty acid amides b) are selected from the class of compounds corresponding to general formula (I):

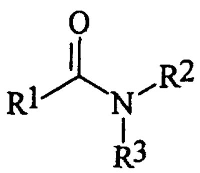

(I)

in which $R^1$ is a saturated alkyl group containing 5 to 21 carbon atoms, $R^2$ and $R^3$ independently of one another are hydrogen or alkyl groups containing 1 to 18 carbon atoms which may each be substituted by up to 6 OH groups, $NH_2$ groups or $C_{1-10}$ alkyl groups and in which up to three methylene groups which are not immediately adjacent one another may be replaced by oxygen, with the proviso that $R^2$ and $R^3$ cannot both be hydrogen and the additional proviso that the mixture containing components a), b) and c) contains fatty acid amides based on unsaturated fatty acids at most in a quantity which corresponds to 40% by weight, based on the quantity of fatty acid amides b) based on saturated fatty acids.

## Revendications

**1.** Utilisation d'amides d'acides gras pour améliorer durablement la compatibilité avec les adhésifs et/ou avec les revêtements de corps moulés, de fibres et de films à base de polyéthylène, par laquelle on soumet un mélange contenant :

a) essentiellement un ou plusieurs polyéthylènes,
b) 0,01 à 20 % en poids - par rapport aux polyéthylènes - d'un ou plusieurs amides d'acides gras et
c) 0,01 à 1000 ppm d'un ou plusieurs composés de métaux de transition-correspondant à la teneur en métal des composés de métaux de transition rapportée aux polyéthylènes -

à des températures comprises entre 180 et 330°C de manière usuelle à une opération de façonnage telle qu'un procédé d'extrusion, de calandrage, de moulage par injection, de moulage par soufflage et autres, étant précisé que les amides d'acides gras b) sont choisis dans la classe des composés ayant la structure générale (I)

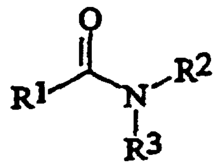

(I)

dans laquelle le radical $R^1$ représente un radical alkyle saturé portant 5 à 21 atomes de C, les radicaux $R^2$ et $R^3$ représentent - indépendamment l'un de l'autre - un atome d'hydrogène ou des radicaux alkyle portant 1 à 18 atomes de C pouvant être substitués chacun par jusqu'à 6 groupes OH, des groupes $NH_2$ ou des groupes alkyle en $C_{1-10}$ et dans lesquels jusqu'à trois groupes méthylène, qui ne sont pas directement voisins peuvent être remplacés par un atome d'oxygène, étant précisé que les deux radicaux $R^2$ et $R^3$ ne représentent pas simultanément un atome d'hydrogène et étant en outre précisé que le mélange contenant les composants a), b) et c) contient des amides d'acides gras à base d'acides gras insaturés au maximum dans une quantité qui correspond à 40 % en poids de la quantité d'amides d'acides gras b) à base d'acides gras saturés.

**2.** Utilisation selon la revendication 1, selon lequel on met en oeuvre l'opération de façonnage du mélange des composants a), b) et c) dans une extrudeuse, le corps moulé de polyoléfine étant, immédiatement après la sortie, de la buse de sortie refroidi au maximum de 50°C en un temps de 0,1 à 5,0 secondes.

**3.** Utilisation selon la revendication 1 ou 2, selon laquelle on met en oeuvre des composés de métaux de transition c) dont les métaux sont choisis dans le groupe du Co, Zr, Fe, Pb, Mn, Ni, Cr, V, Ce, Ti et Sn.

**4.** Utilisation selon l'une quelconque des revendications 1 à 3, selon laquelle on choisit les composés de métaux de transition c) dans le groupe des sels de métaux de transition.

**5.** Utilisation selon l'une quelconque des revendications 1 à 4, selon laquelle on met en oeuvre les composés de métaux de transition c) dans une quantité inférieure à 5 ppm - correspondant à la teneur en métal des composés de métaux de transition c) par rapport aux polyéthylènes a)-

**6.** Utilisation selon l'une quelconque des revendications 1 à 5, selon laquelle on ajuste le rapport pondéral des amides d'acides gras b) à la teneur en métal des composés de métaux de transition c) dans le domaine de 10:0,1 et $10:10^{-7}$.

**7.** Utilisation selon l'une quelconque des revendications 1 à 6, selon laquelle lors de l'opération de façonnage des polyoléfines on ajoute d'autres excipients usuels et/ou on met en oeuvre un traitement Corona ou au plasma de manière usuelle en tant qu'autre étape opératoire supplémentaire.

**8.** Procédé de fabrication de corps moulés, fibres et films à base de polyéthylène collés et/ou enduits,
**caractérisé en ce qu'**
on soumet un mélange contenant

a) essentiellement un ou plusieurs polyéthylènes,
b) 0,01 à 20 % en poids - par rapport aux polyéthylènes - d'un ou plusieurs amides d'acides gras et
c) 0,01 à 1000 ppm d'un ou plusieurs composés de métaux de transition - correspondant à la teneur en métal des composés de métaux de transition rapportée aux polyéthylènes -

à des températures comprises entre 180 et 330°C de manière usuelle à une opération de façonnage telle qu'un procédé d'extrusion, de calandrage, de moulage par injection, de moulage par soufflage et autres, et on met ensuite en contact de manière usuelle les corps moulés, fibres et films à base de polyoléfine, présentant une compatibilité améliorée avec les adhésifs et/ou avec les revêtements ainsi obtenus avec une colle et/ou, avec une masse de revêtement, étant précisé que les amides d'acides gras b) sont choisis dans la classe des composés ayant la structure générale (I)

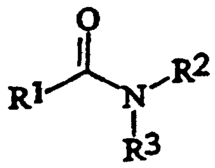

(I)

dans laquelle le radical $R^1$ représente un radical alkyle saturé portant 5 à 21 atomes de C, les radicaux $R^2$ et $R^3$ représentent - indépendamment l'un de l'autre - un atome d'hydrogène ou des radicaux alkyle portant 1 à 18 atomes de C pouvant être substitués chacun par jusqu'à 6 groupes OH, des groupes $NH_2$ ou des groupes alkyle en $C_{1-10}$ et dans lesquels jusqu'à trois groupes méthylène, qui ne sont pas directement voisins, peuvent être remplacés par un atome d'oxygène, étant précisé que les deux radicaux $R^2$ et $R^3$ ne représentent pas simultanément un atome d'hydrogène et étant en outre précisé que le mélange contenant les composants a), b) et c) contient des amides d'acides gras à base d'acides gras insaturés au maximum dans une quantité qui correspond à 40 % en poids de la quantité d'amides d'acides gras b) à base d'acides gras saturés.